# EUROPEAN PATENT APPLICATION

(11) **EP 2 894 761 A1**
(43) Date of publication of application: **15.07.2015**
(21) Application number: 14000075.3
(22) Date of filing: 09.01.2014
(51) Int. Cl.: H02J 7/02, A44C 5/00

(54) **Wireless charge and discharge wrist band for placing cell phone**

(71) Applicant: Coremate Technical Co., Ltd., 33393 Taoyuan County (TW)
(72) Inventor: Wang, Robert, 33393 Taoyuan County (TW); Yeh, Shih-Ming, 33393 Taoyuan County (TW)
(74) Representative: Zeitler Volpert Kandlbinder Patent- und Rechtsanwälte Partnerschaft mbB

(57) **Abstract**

A wireless charge and discharge wrist band for placing a cell phone includes a watch band. The watch band is embedded with a plurality of batteries. The watch band has V-shaped grooves between the batteries. The watch band is provided with a watch seat. The watch seat has an engaging trough thereon. The bottom of the watch seat is provided with a charge coil, and the top of the watch seat is provided with a power supply coil. The charge coil and the power supply coil are connected with the batteries. The engaging trough is adapted for engagement of the cell phone. Through electromagnetic induction to transmit power, the cell phone can be charged anytime. During charging, the cell phone can be used and taken along. The watch band can be in different colors to mate with cell phone to enhance its fashion.

## Description

### BACKGROUND OF THE INVENTION

### 1. Field of the Invention

The present invention relates to a wireless charge and discharge device, and more particularly to a wireless charge and discharge wrist band for placing a cell phone.

### 2. Description of the Prior Art

A cell phone is a common portable communication apparatus. Along with the development of electronic technique, the functions of the cell phone are increasing day by day. The cell phone becomes an essential appliance in our modern life. However, the cell phone needs electricity when in use. The conventional cell phone proceeds with power transmission through a wired power supply device. By using the wired power supply device to proceed with power transmission for the cell phone, the range for the user to use the cell phone is limited to where the wired poser supply device is located. The cell phone cannot be charged anytime and anywhere. During using the cell phone, the cell phone may have a shortage of power. When the user wants to proceed with power transmission for the cell phone, the cell phone must be connected with the wired power supply device to supply the required power. This is not convenient for operation. In addition, the connection of the cell phone and the wired power supply device may have the risk of electric leakage. Accordingly, the inventor of the present invention has devoted himself based on his many years of practical experiences to solve this problem.

### SUMMARY OF THE INVENTION

The primary object of the present invention is to provide a wireless charge and discharge wrist band for placing a cell phone. The cell phone can be charged anytime and anywhere. The cell phone is coupled to the wireless charge and discharge wrist band without connection points for power transmission. During power transmission, the user can take the cell phone along. It is convenient to carry and use the cell phone.

In order to achieve the aforesaid object, the wireless charge and discharge wrist band for placing a cell phone of the present invention comprises a watch band. The watch band is provided with at least one battery. The battery is rechargeable and able to store electricity. The watch band is provided with a watch seat. The watch seat has an engaging trough thereon. The bottom of the watch seat is provided with a charge coil. The charge coil is embedded in the watch seat. The charge coil is connected with the battery. The top of the watch seat is provided with a power supply coil. The power supply coil is embedded in the watch seat. The power supply coil is connected with the battery.

The watch band of the wireless charge and discharge wrist band of the present invention is provided with the watch seat combined with the charge coil and the power supply coil for the watch band to combine with the wireless charge and discharge device. The cell phone is selectively engaged on the watch seat through the engaging trough. Through electromagnetic induction to transmit power, the cell phone can proceed with power transmission anytime and anywhere. During power transmission of the cell phone, the user can take the cell phone along. It is convenient to carry and use the cell phone and enhances the safety of using the cell phone.

### BRIEF DESCRIPTION OF THE DRAWINGS

Fig. 1 is a perspective view of the present invention;
Fig. 2 is a sectional view of the present invention;
Fig. 3 is a schematic view of the present invention when in use;
Fig. 4 is a sectional view of the present invention when in use;
Fig. 5 is a diagram showing the present invention to supply power; and
Fig. 6 is a diagram showing the present invention to discharge.

### DETAILED DESCRIPTION OF THE PREFERRED EMBODIMENTS

Embodiments of the present invention will now be described, by way of example only, with reference to the accompanying drawings.

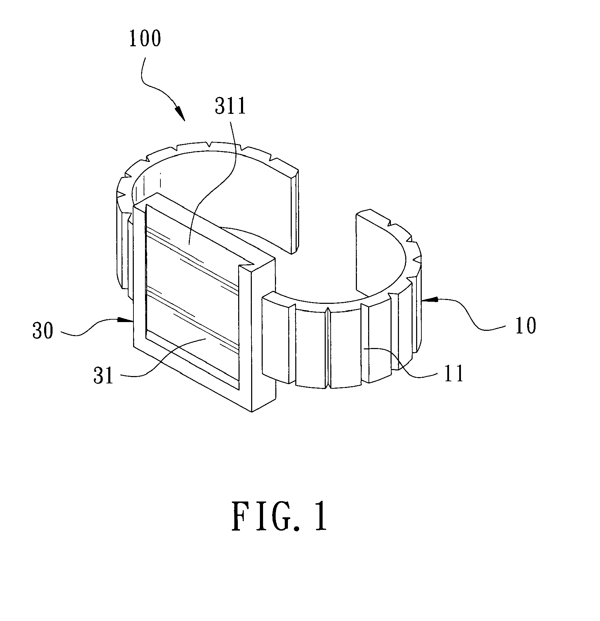

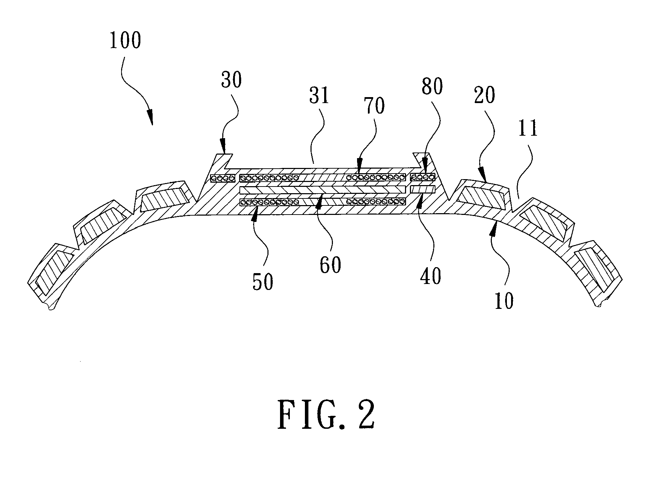

Fig. 1 is a perspective view of the present invention. Fig. 2 is a sectional view of the present invention. The present invention discloses a wireless charge and discharge wrist band 100 for placing a cell phone. The wireless charge and discharge wrist band 100 comprises a watch band 10, at least one battery 20, a watch seat 30, a main control board 40, a charge coil 50, a separator 60, a power supply coil 70, and a NFC (Near Field Communication) coil 80.

The watch band 10 is made of a waterproof material, which has the resistance of water. The watch band 10 has a plurality of spaced V-shaped grooves 11 along a short axis thereof. The V-shaped grooves 11 are arranged along the short axis of the watch band 10 to traverse the watch band 10. Through the V-shaped grooves 11, the watch band 10 forms a multi-section crawler structure. Through the V-shaped grooves 11, the watch band 10 is formed with thin portions, such that the watch band 10 has better air permeability and is flexible. It is noted that the V-shaped grooves 11 are not limited to be disposed on the outer side of the watch band 10. The V-shaped grooves 11 may be disposed on the inner side of the watch band 10 for the watch band 10 to form a multi-section front crawler structure or a rear crawler structure.

The battery 20 is disposed on the watch band 10. The battery 20 is rechargeable and able to store electricity. The present invention has a plurality of batteries 20 which are spaced and embedded along the long axis of the watch band 10. The batteries 20 are respectively embedded between the V-shaped grooves 11, so that the batteries 20 and the V-shaped grooves 11 are spaced. The batteries 20 are electrically connected with one another.

The watch seat 30 is disposed on the watch band 10. In the present invention, the watch seat 30 is disposed at the middle position of the watch band 10. The watch seat 30 has an engaging trough 31 thereon. The engaging trough 31 has a trapezoid cross-section, namely, the engaging trough 31 is gradually enlarged from an upper opening to a bottom side thereof. One side of the engaging trough 31 extends to a circumferential side of the watch seat 30. The circumferential side of the watch seat 30 is formed with an insertion opening 311.

The main control board 40 is embedded in the watch seat 30, and the main control board 40 is connected with the batteries 20.

The charge coil 50 is disposed at the bottom of the watch seat 30 and embedded in the watch seat 30. The charge coil 50 is connected with the main control board 40. The charge coil 50 can generate electric current through electromagnetic induction to input the electric current to the batteries 20 for the batteries 20 to be charged.

The separator 60 is disposed above the charge coil 50 and embedded in the watch seat 30. The separator 60 is adapted to isolate magnetic field and prevent electromagnetic interference.

The power supply coil 70 is disposed above the separator 60 and at the top of the watch seat 30, and embedded in the watch seat 30. The power supply coil 70 is connected with the main control board 40. The power supply coil 70 is for the batteries 20 to output electric current so as to generate an induction field.

The NFC coil 80 is disposed at the surrounding side of the power supply coil 70 and embedded in the watch seat 30 and connected with the main control board 40.

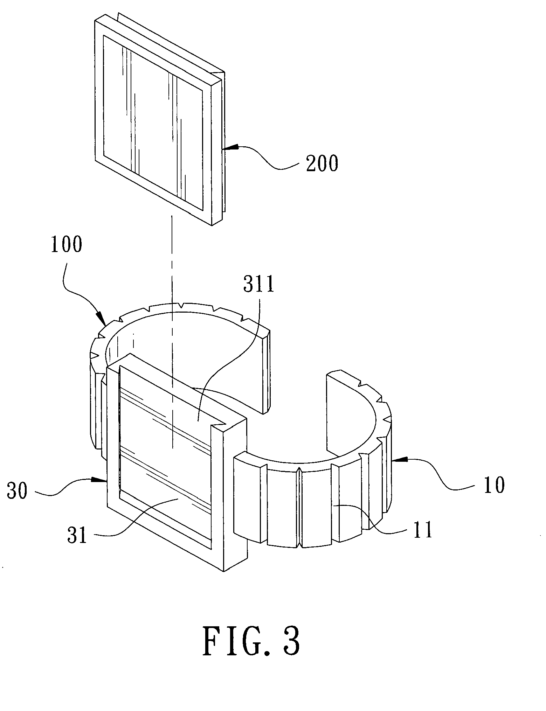

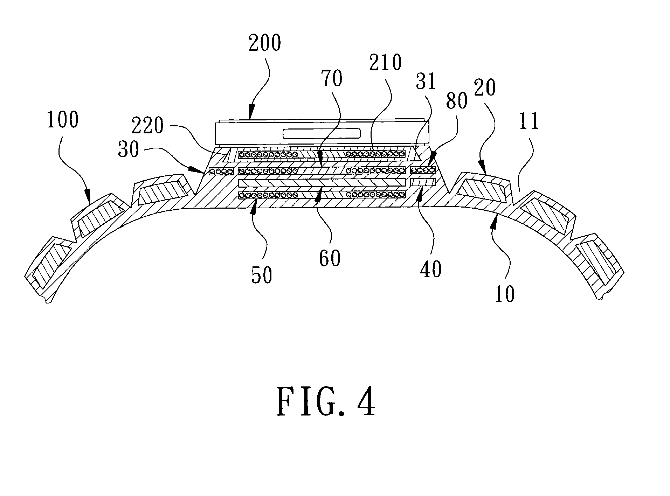

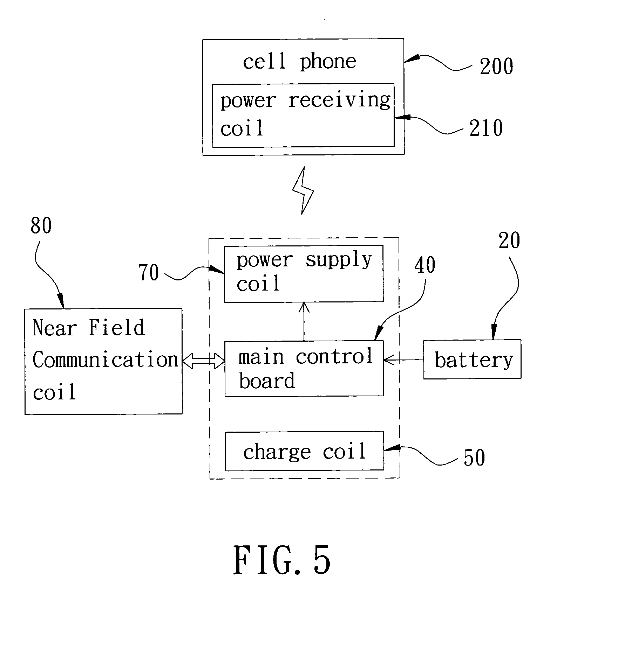

Referring to Fig. 3 to Fig. 5, to cooperate with the wireless charge and discharge wrist band 100, a cell phone 200 is provided with a power receiving coil 210. The rear casing of the cell phone 200 is provided with an engaging block 220 corresponding to the engaging trough 31. Thus, the engaging block 220 of the cell phone 200 is inserted through the insertion opening 311 of the engaging trough 31 for the cell phone 200 to be engaged in the engaging trough 31, such that the cell phone 200 is coupled to the watch seat 30. At this time, the batteries 20 of the wireless charge and discharge wrist band 100 uses the power supply coil 70 to transmit the electricity in the way of electromagnetic induction through the main control board 40 to the power receiving coil 210 of the cell phone 200, such that the cell phone 200 can proceed with power transmission.

Accordingly, the user can wear the wireless charge and discharge wrist band 100, and the cell phone 200 is coupled to the watch seat 30 to be charged anytime and anywhere. During power transmission of the cell phone 200, the user can take the cell phone 200 along. It is convenient to carry and use the cell phone 200 and enhances the safety of using the cell phone 200.

It is noted that the batteries 20 are embedded between the V-shaped grooves 11 of the watch band 10 for the wireless charge and discharge wrist band 100 to supply more power to the cell phone 200.

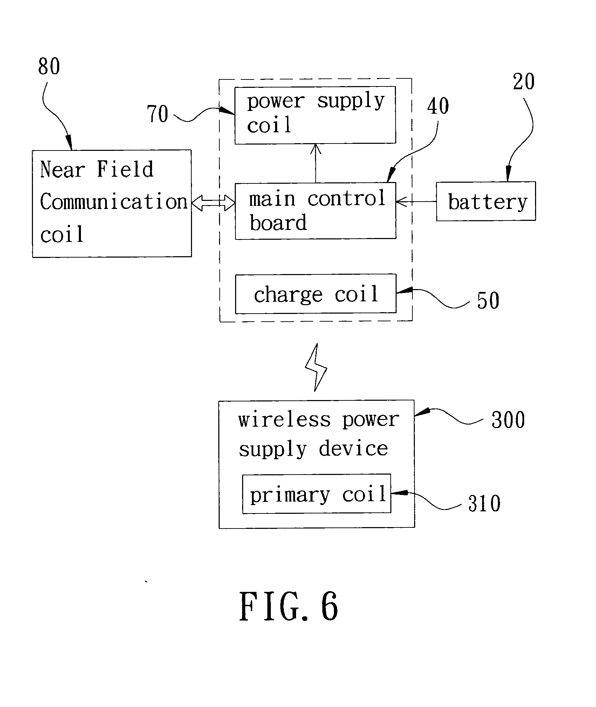

Referring to Fig. 6, when the batteries 20 needs charging, by using a wireless power supply device 300, the mains supply transmits the power to the charge coil 50 in the way of electromagnetic induction through the primary coil 310 of the wireless power supply device 300, and then the charge coil 50 stores the power to the batteries 20 through the main control board 40. Thus, the wireless charge and discharge wrist band 100 achieves the object of charging so as to supply the required power to the cell phone 200.

It is noted that the wireless charge and discharge wrist band 100 can proceed near field communication through the NFC coil 80.

It is further noted that the wireless charge and discharge wrist band 100 can be in different colors. The width and size of the watch band 10 of the wireless charge and discharge wrist band 100 are changeable, and the size and shape of the watch seat 30 are changeable to mate with the cell phone 200. Thus, the wireless charge and discharge wrist band 100 has more diversity and choice.

The features and expected effects of the present invention are described as follows:
1. The watch band 10 of the wireless charge and discharge wrist band 100 of the present invention is provided with the watch seat 30 combined with the charge coil 50 and the power supply coil 70 for the watch band 10 to combine with the wireless charge and discharge device. The cell phone 20 is selectively engaged on the watch seat 30 through the engaging trough 31. Through electromagnetic induction to transmit power, the cell phone 200 can proceed with power transmission anytime and anywhere. During power transmission of the cell phone 200, the user can take the cell phone 200 along. It is convenient to carry and use the cell phone 200 and enhances the safety of using the cell phone 200.
2. The engaging trough 31 of the wireless charge and discharge wrist band 100 of the present invention is adapted for the cell phone 20 to be selectively engaged on the watch seat 30, so that the user can change the cell phone 200 to couple with the watch seat 30 at will.
3. The wireless charge and discharge wrist band 100 of the present invention provides the engaging trough 31 for the cell phone 20 to be selectively engaged on the watch seat 30 and uses the charge coil 50 and the power supply coil 70 to transmit power in the way of electromagnetic induction so that the cell phone 200 and the watch seat 30 are coupled without connection points for power transmission. The cell phone 200 can be used more conveniently, and the safety of using the cell phone 200 can be enhanced.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A wireless charge and discharge wrist band for placing a cell phone, comprising:
a watch band;
at least one battery disposed on the watch band, the battery being rechargeable and able to store electricity;
a watch seat disposed on the watch band, the watch seat having an engaging trough thereon;
a charge coil disposed at a bottom of the watch seat and embedded in the watch seat, the charge coil being connected with the battery; and
a power supply coil disposed at a top of the watch seat and embedded in the watch seat, the power supply coil being connected with the battery.

2. The wireless charge and discharge wrist band for placing a cell phone as claimed in claim 1, wherein the watch band has a plurality of spaced V-shaped grooves along a short axis thereof, the V-shaped grooves being arranged along the short axis of the watch band to traverse the watch band.

3. The wireless charge and discharge wrist band for placing a cell phone as claimed in claim 2, wherein a plurality of batteries are embedded and spaced along a long axis of the watch band, the batteries being respectively embedded between the V-shaped grooves so that the batteries and the V-shaped grooves are spaced.

4. The wireless charge and discharge wrist band for placing a cell phone as claimed in claim 1, wherein the engaging trough is gradually enlarged from an upper opening to a bottom side thereof.

5. The wireless charge and discharge wrist band for placing a cell phone as claimed in claim 1, further comprising a main control board, the main control board being embedded in the watch seat, the charge coil and the power supply coil being connected with the battery through the main control board.

6. The wireless charge and discharge wrist band for placing a cell phone as claimed in claim 1, further comprising a separator, the separator being disposed between the charge coil and the power supply coil and embedded in the watch seat, the separator being adapted to isolate magnetic field and prevent electromagnetic interference.

7. The wireless charge and discharge wrist band for placing a cell phone as claimed in claim 1, further comprising a NFC (Near Field Communication) coil, the NFC coil being disposed at a surrounding side of the power supply coil and embedded in the watch seat.

8. The wireless charge and discharge wrist band for placing a cell phone as claimed in claim 1, wherein one side of the engaging trough extends to a circumferential side of the watch seat, the circumferential side of the watch seat being formed with an insertion opening.
